# EUROPÄISCHE PATENTSCHRIFT

(11) **EP 1 699 578 B1**
(45) Veröffentlichungstag und Bekanntmachung des Hinweises auf die Patenterteilung: **11.06.2008**
(21) Anmeldenummer: 04820606.4
(22) Anmeldetag: 10.11.2004
(51) Int. Cl.: B21D 53/08, H01F 7/02, B21C 37/06

(54) **VERFAHREN ZUR HERSTELLUNG EINES HÜLSENFÖRMIGEN GEHÄUSES AUS MEHREREN FLACHEN BLECHEN**
METHOD FOR PRODUCING A SLEEVE-SHAPED HOUSING MADE OF A NUMBER OF FLAT METAL SHEETS
PROCEDE DE PRODUCTION D'UN BOITIER EN FORME DE MANCHON, A PARTIR DE PLUSIEURS TOLES PLATES

(30) Priorität: 20.12.2003 DE 10360327
(43) Veröffentlichungstag der Anmeldung: 13.09.2006
(73) Patentinhaber: ROBERT BOSCH GMBH, 70442 Stuttgart (DE)
(72) Erfinder: REITER, Ferdinand, 71706 Markgröningen (DE)
(86) Internationale Anmeldenummer: PCT/EP2004/052915
(87) Internationale Veröffentlichungsnummer: WO 2005/061150

(56) Entgegenhaltungen:
- EP-A- 0 869 265
- EP-A- 0 931 605
- WO-A-01/74507
- DE-A1- 4 237 405
- DE-A1- 19 645 928
- US-A- 4 896 409
- SCHNEIDER C ET AL: "TAILORED BLANKS - EIN WERKSTOFF FUR NEUE FORMEN DER KONSTRUKTION.ÖTAILORED BLANKS - A MATERIAL FOR NEW WAYS OF DESIGN" THYSSEN TECHNISCHE BERICHTE, DUISBURG, DE, Nr. 1, Januar 1992 (1992-01), Seiten 97-106, XP000600330

## Beschreibung

### Stand der Technik

Die Erfindung geht aus von einem Verfahren zur Herstellung eines festen Ventilgehäuses nach dem Oberbegriff von Anspruch 1.

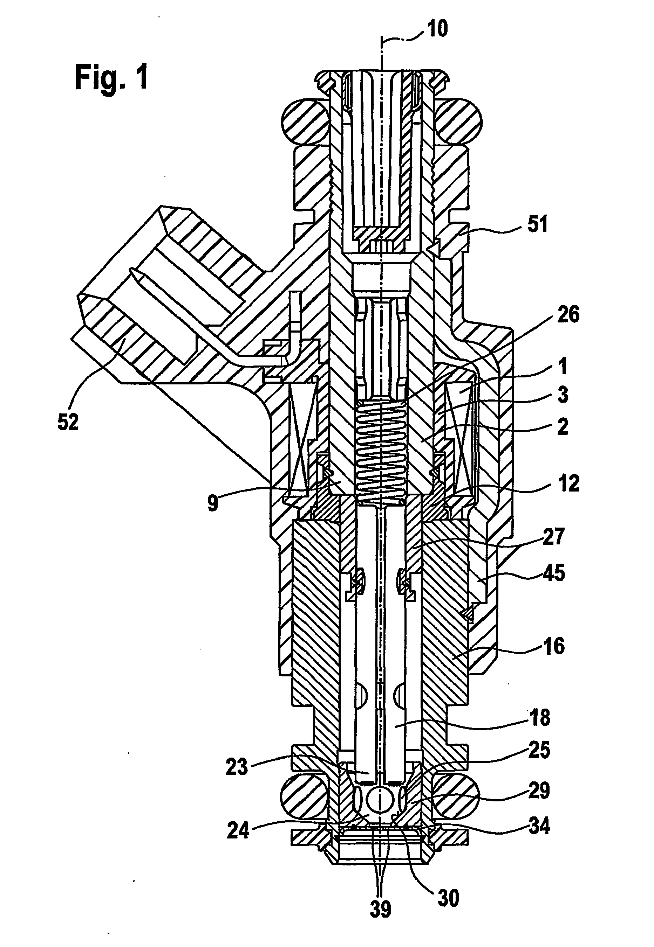

In der Figur 1 ist ein bekanntes Brennstoffeinspritzventil aus dem Stand der Technik dargestellt, das einen klassischen dreiteiligen Aufbau eines inneren metallenen Strömungsfiihrungsteils und zugleich Gehäusebauteils besitzt. Dieses innere Ventilrohr wird aus einem einen Innenpol bildenden Einlassstutzen, einem nichtmagnetischen Zwischenteil und einem einen Ventilsitz aufnehmenden Ventilsitzträger gebildet und in der Beschreibung zu Figur 1 näher erläutert.

Aus der DE 35 02 287 A1 ist bereits ein gattungsgemässes Verfahren zur Herstellung eines hohlzylindrischen metallenen Gehäuses mit zwei magnetisierbaren Gehäuseteilen und einer dazwischen liegenden, die Gehäuseteile magnetisch trennenden, amagnetischen Gehäusezone bekannt. Dieses metallene Gehäuse wird dabei aus einem magnetisierbaren Rohling einstückig bis auf ein Übermaß im Außendurchmesser vorbearbeitet, wobei in der Innenwand des Gehäuses in der Breite der gewünschten mittleren Gehäusezone eine Ringnut eingestochen wird. Bei rotierendem Gehäuse wird ein nichtmagnetisierbares Füllmaterial in die Ringnut unter Erwärmung des Ringnutbereichs gefüllt und die Rotation des Gehäuses bis zur Erstarrung des Füllmaterials aufrechterhalten. Anschließend wird das Gehäuse außen bis auf das Endmaß des Außendurchmessers überdreht, so dass keine Verbindung mehr zwischen den magnetisierbaren Gehäuseteilen besteht. Ein derart hergestelltes Ventilgehäuse kann z.B. in Magnetventilen für Antiblockiersysteme (ABS) von Kraftfahrzeugen zum Einsatz kommen.

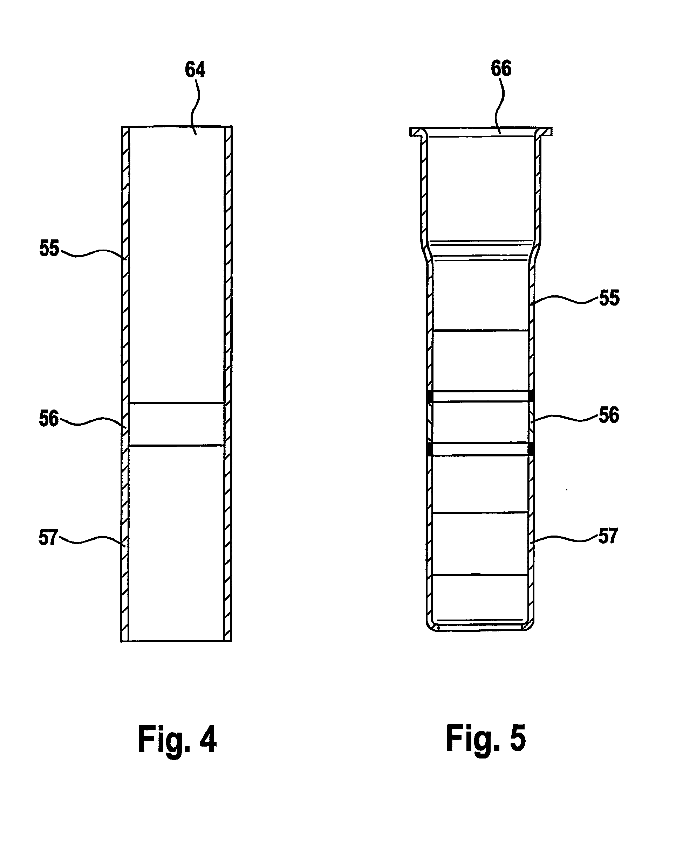

Bekannt sind des weiteren aus der DE 42 37 405 C2 Verfahren zur Herstellung eines festen Kerns für Einspritzventile für Brennkraftmaschinen (Figur 5 des Dokuments). Die Verfahren zeichnen sich dadurch aus, dass unmittelbar oder über vorherige Umwandlungsprozesse ein einteiliges hülsenförmiges, magnetisches, martensitisches Werkstück bereitgestellt wird, das eine örtliche Wärmebehandlung in einem mittleren Abschnitt des magnetischen, martensitischen Werkstücks zur Umwandlung dieses mittleren Abschnitts in einen nichtmagnetischen, austenitischen mittleren Abschnitt erfährt. Alternativ werden bei der örtlichen Wärmebehandlung mittels Laser geschmolzenes Austenit bzw. geschmolzenes Ferrit bildende Elemente an den Ort der Wärmebehandlung zur Bildung eines nichtmagnetischen, austenitischen mittleren Abschnitts des festen Kerns hinzugefügt.

### Vorteile der Erfindung

Das erfindungsgemäße Verfahren nach Anspruch 1 hat den Vorteil, dass auf besonders einfache und kostengünstige Art und Weise Gehäuse mit einer magnetischen Trennung großserientechnisch zuverlässig herstellbar sind. Insbesondere ist durch die Einfachheit der Einzelbauteile nur ein gegenüber den bekannten Herstellungsverfahren herabgesetzter Aufwand an Spezialwerkzeugen notwendig. Außerdem erlaubt das erfindungsgemäße Verfahren eine hohe Flexibilität in der Materialauswahl, da eine Vielzahl von Materialien für die einzelnen zu verwendenden Blechstreifen erfindungsgemäß einsetzbar ist.

Von Vorteil ist es zudem, dass eine hohe Flexibilität in der Ausgestaltung der Geometrie des Gehäuses selbst, wie z.B. bei Länge, Außendurchmesser, Abstufungen ermöglicht ist.

Durch eine großserientechnische Fertigung der Gehäuse können die bei üblicher Herstellungstechnologie kritischen Schweißnähte hier durch gute Zugänglichkeit und optimal einstellbare Parameter sehr gut auf die Prozesssicherheit optimiert werden.

Durch die in den Unteransprüchen aufgeführten Maßnahmen sind vorteilhafte Weiterbildungen und Verbesserungen des im Hauptanspruch angegebenen Verfahrens möglich.

### Zeichnung

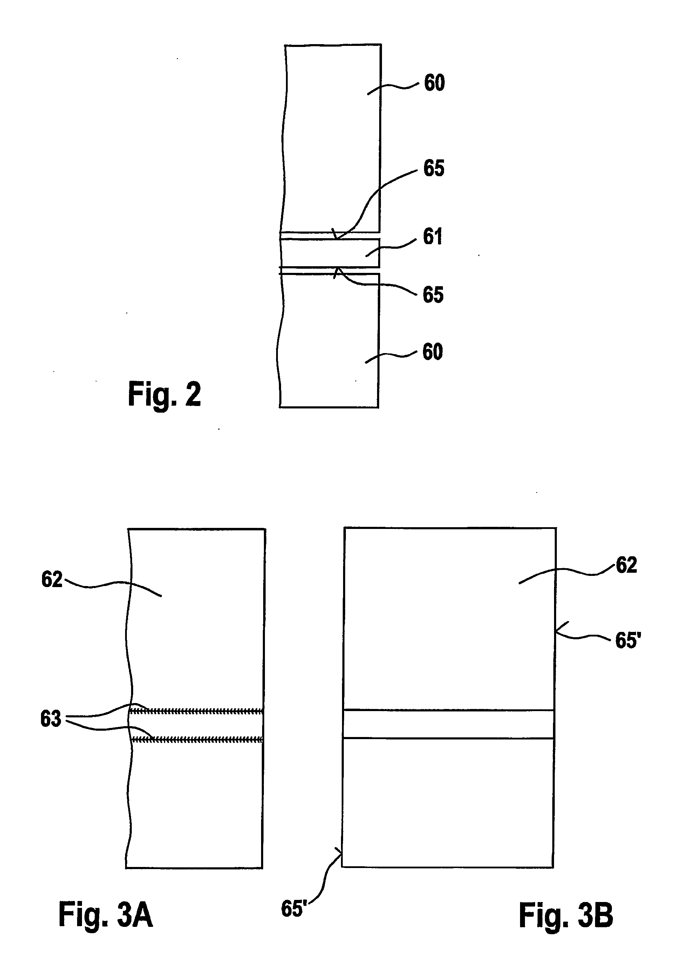

Ein Ausführungsbeispiel der Erfindung ist in der Zeichnung vereinfacht dargestellt und in der nachfolgenden Beschreibung näher erläutert. Es zeigen Figur 1 ein Brennstoffeinspritzventil gemäß dem Stand der Technik mit einem dreiteiligen inneren metallenen Ventilrohr als Gehäuse und Figuren 2 bis 5 schematisch Verfahrensschritte eines erfindungsgemäßen Verfahrens zur Herstellung eines festen Gehäuses.

### Beschreibung der Ausführungsbeispiele

Bevor anhand der Figuren 2 bis 5 die erfindungsgemäßen Verfahrensschritte des Verfahrens zur Herstellung eines festen Gehäuses beschrieben werden, soll anhand von Figur 1 ein Brennstoffeinspritzventil des Standes der Technik als ein mögliches Einsatzprodukt für ein erfindungsgemäß hergestelltes Gehäuse näher erläutert werden.

Das in der Figur 1 beispielsweise dargestellte elektromagnetisch betätigbare Ventil in der Form eines Einspritzventils für Brennstoffeinspritzanlagen von gemischverdichtenden, fremdgezündeten Brennkraftmaschinen hat einen von einer Magnetspule 1 umgebenen, als Brennstoffeinlassstutzen und Innenpol dienenden rohrförmigen Kern 2, der beispielsweise über seine gesamte Länge einen konstanten Außendurchmesser aufweist. Ein in radialer Richtung gestufter Spulenkörper 3 nimmt eine Bewicklung der Magnetspule 1 auf und ermöglicht in Verbindung mit dem Kern 2 einen kompakten Aufbau des Einspritzventils im Bereich der Magnetspule 1.

Mit einem unteren Kernende 9 des Kerns 2 ist konzentrisch zu einer Ventillängsachse 10 dicht ein rohrförmiges metallenes nichtmagnetisches Zwischenteil 12 durch Schweißen verbunden und umgibt das Kernende 9 teilweise axial. Stromabwärts des Spulenkörpers 3 und des Zwischenteils 12 erstreckt sich ein rohrförmiger Ventilsitzträger 16, der fest mit dem Zwischenteil 12 verbunden ist. In dem Ventilsitzträger 16 ist eine axial bewegbare Ventilnadel 18 angeordnet. Am stromabwärtigen Ende 23 der Ventilnadel 18 ist ein kugelförmiger Ventilschließkörper 24 vorgesehen, an dessen Umfang beispielsweise fünf Abflachungen 25 zum Vorbeiströmen des Brennstoffs vorgesehen sind.

Die Betätigung des Einspritzventils erfolgt in bekannter Weise elektromagnetisch. Zur axialen Bewegung der Ventilnadel 18 und damit zum Öffnen entgegen der Federkraft einer Rückstellfeder 26 bzw. zum Schließen des Einspritzventils dient der elektromagnetische Kreis mit der Magnetspule 1, dem Kern 2 und einem Anker 27. Der rohrförmige Anker 27 ist mit einem dem Ventilschließkörper 24 abgewandten Ende der Ventilnadel 18 durch beispielsweise eine Schweißnaht fest verbunden und auf den Kern 2 ausgerichtet. In das stromabwärts liegende, dem Kern 2 abgewandte Ende des Ventilsitzträgers 16 ist ein zylinderförmiger Ventilsitzkörper 29, der einen festen Ventilsitz 30 aufweist, durch Schweißen dicht montiert.

Der kugelförmige Ventilschließkörper 24 der Ventilnadel 18 wirkt mit dem sich in Strömungsrichtung kegelstumpfförmig verjüngenden Ventilsitz 30 des Ventilsitzkörpers 29 zusammen. An seiner unteren Stirnseite ist der Ventilsitzkörper 29 mit einer beispielsweise topfförmig ausgebildeten Spritzlochscheibe 34 fest und dicht durch eine z. B. mittels eines Lasers ausgebildete Schweißnaht verbunden. In der Spritzlochscheibe 34 sind wenigstens eine, beispielsweise vier durch Erodieren oder Stanzen ausgeformte Abspritzöffnungen 39 vorgesehen.

Um den Magnetfluss zur optimalen Betätigung des Ankers 27 bei Bestromung der Magnetspule 1 und damit zum sicheren und genauen Öffnen und Schließen des Ventils zu dem Anker 27 zu leiten, ist die Magnetspule 1 von wenigstens einem, beispielsweise als Bügel ausgebildeten und als ferromagnetisches Element dienenden Leitelement 45 umgeben, das die Magnetspule 1 in Umfangsrichtung wenigstens teilweise umgibt sowie mit seinem einen Ende an dem Kern 2 und seinem anderen Ende an dem Ventilsilzträger 16 anliegt und mit diesen z. B. durch Schweißen, Löten bzw. Kleben verbindbar ist Ein inneres metallenes Ventilrohr als Grundgerüst und damit auch Gehäuse des Brennstoffeinspritzventils bilden der Kern 2, das nichtmagnetische Zwischenteil 12 und der Ventilsitzträger 16, die fest miteinander verbunden sind und sich insgesamt über die gesamte Länge des Brennstoffeinspritzventils erstrecken. Alle weiteren Funktionsgruppen des Ventils sind innerhalb oder um das Ventilrohr herum angeordnet. Bei dieser Anordnung des Ventilrohrs handelt es sich um den klassischen dreiteiligen Aufbau eines Gehäuses für ein elektromagnetisch betätigbares Aggregat, wie ein Ventil, mit zwei ferromagnetischen bzw. magnetisierbaren Gehäusebereichen, die zur wirkungsvollen Leitung der Magnetkreislinien im Bereich des Ankers 27 mittels eines nichtmagnetischen Zwischenteils 12 magnetisch voneinander getrennt oder zumindest über eine magnetische Drosselstelle miteinander verbunden sind.

Das Einspritzventil ist weitgehend mit einer Kunststoffumspritzung 51 umschlossen, die sich vom Kern 2 ausgehend in axialer Richtung über die Magnetspule 1 und das wenigstens eine Leitelement 45 bis zum Ventilsitzträger 16 erstreckt, wobei das wenigstens eine Leitelement 45 vollständig axial und in Umfangsrichtung überdeckt ist. Zu dieser Kunststoffiunspritzung 51 gehört beispielsweise ein mitangespritzter elektrischer Anschlussstecker 52.

Mit den in den Figuren 2 bis 5 schematisch angedeuteten Verfahrensschritten des erfindungsgemäßen Verfahrens zur Herstellung eines festen Gehäuses ist es in vorteilhafter Weise möglich, besonders einfach und kostengünstig dünnwandige Gehäuse 66 für verschiedenste Einsatzzwecke, u.a. bevorzugt für elektromagnetisch betätigbare Ventile herzustellen, die ein oben beschriebenes dreiteiliges Ventilrohr ersetzen können.

In einem ersten Verfahrensschritt (Figur 2) werden drei flache Bleche 60, 61 in Form von Blechstreifen bereitgestellt, wobei die zwei äußeren Bleche 60 aus einem magnetischen bzw. magnetisierbaren Material bestehen und z.B. ferromagnetisch oder ferritisch sind und das zwischen diese beiden Bleche 60 eingelegte mittlere Blech 61 aus einem nichtmagnetischen Material besteht und z.B. eine austenitische Gefügezustand aufweist. Bei diesen bereitzustellenden Blechen 60, 61 handelt es sich um flach gewalzte, exakt gearbeitete und maßgeschneiderte Blechabschnitte, die als "taylored blank" bezeichnet werden. Die drei Bleche 60, 61 werden letztlich an dem vollendeten Gehäuse 66 drei Zonen 55, 56, 57 bilden, die jeweils unmittelbar aufeinanderfolgend aufgrund des ausgewählten Materials unterschiedliche Magneteigenschaften aufweisen. Dabei können jedoch die Zonen 55 und 57, die voneinander durch die Zone 56 getrennt sind, aus einem identischen Material mit gleichen Magneteigenschaften bestehen (Figur 5).

Die drei Bleche 60, 61 werden nachfolgend in ebenem Zustand und zueinander ausgerichtet an ihren beiden Stoßbereichen, an denen sich jeweils die unmittelbar benachbart liegenden Begrenzungskanten 65 der Bleche 60, 61 gegenüberliegen, mittels Fügeverfahren, z.B. mittels Laserschweißen dicht und dauerhaft fest miteinander verbunden. In Figur 3A ist ein flacher Blechabschnitt 62 gezeigt, der aus den drei ursprünglichen Blechen 60, 61 besteht, wobei das mittlere nichtmagnetische Blech 61 über zwei Schweißnähte 63 an den beiden außen gegenüberliegenden Blechen 60 befestigt ist, so dass letztlich nur noch ein Blechabschnitt 62 mit drei Zonen vorliegt. Figur 3B deutet den auch als Verbundblech bezeichenbaren Blechabschnitt 62 nach einer möglicherweise notwendigen Nachbearbeitung im Bereich der Fügestellen zwischen den drei Blechen 60, 61 an.

In einem weiteren Bearbeitungsschritt wird der derart vorliegende Blechabschnitt 62 durch Rollen bzw. Rollieren oder Biegen in eine Hülsenform gebracht und zwar bis zu einem Zustand, an dem sich die beiden Begrenzungskanten 65', die sich über alle drei Zonen 55, 56, 57 des Blechabschnitts 62 erstrecken, nah gegenüberliegen bzw. berühren. Dabei kommt z.B. ein dornartiges Werkzeug zum Einsatz. Nach diesem Verfahrensschritt liegt ein Hülsenrohling 64 vor, dessen beide sich gegenüberliegende, längserstreckende Begrenzungskanten 65' Stoßkanten bilden, an denen eine gegenseitige Befestigung erfolgt. Dieses Fügen der Begrenzungskanten 65' des gerollten Blechabschnitts 62 miteinander kann ebenfalls mittels Laserschweißen vorgenommen werden. In Figur 4 ist ein in Umfangsrichtung geschlossener Hülsenrohling 64 mit drei Zonen 55, 56, 57 nach dem Rollen und dem Verschweißen der Begrenzungskanten 65' zu sehen.

Abschließend wird der Hülsenrohling 64 einer Endbearbeitung unterzogen, um das feste Gehäuse 66 in einer gewünschten Geometrie vorliegen zu haben. Im Falle eines Einsatzes eines erfindungsgemäß hergestellten Gehäuses 66 in einem Brennstoffeinspritzventil kann es von Vorteil sein, das Gehäuse 66 durch fertigungstechnische Maßnahmen wie Abstrecken, Rollieren, Bördeln und/oder Auftulpen spezifisch auszuformen. Wie Figur 5 zeigt, kann ein solches hülsenförmiges Gehäuse 66 an beiden Enden Umbördelungen und in mittleren Abschnitten stufenartige Aufweitungen oder Verengungen aufweisen. Mit dem Gehäuse 66 liegt ein Bauteil vor, das in einem bekannten Brennstoffeinspritzventil gemäß Figur 1 die Summe der Funktionen des Ventilrohrs bestehend aus Kern 2, Zwischenteil 12 und Ventilsitzträger 16 komplett übernehmen kann und sich somit auch beispielsweise über die gesamte axiale Länge eines Brennstoffeinspritzventils erstreckt.

Die Erfindung ist keinesfalls auf den Einsatz in Brennstoffeinspritzventilen oder Magnetventilen für Antiblockiersysteme beschränkt, sondern betrifft alle elektromagnetisch betätigbaren Ventile unterschiedlicher Anwendungsgebiete allgemein alle festen Ventilgehäuse in Aggregaten, bei denen Zonen 55, 56, 57 unterschiedlichen Magnetismus aufeinanderfolgend erforderlich sind. Auf die erfindungsgemäße Weise sind nicht nur Gehäuse 66 mit drei aufeinander folgenden Zonen 55, 56, 57 herstellbar, sondern auch Gehäuse 66 mit mehr als drei Zonen 55, 56,57.

## Patentansprüche

1. Verfahren zur Herstellung eines festen Ventilgehäuses (66) für ein elektromagnetisch betätigbares Ventil,
wobei das Gehäuse (66) wenigstens drei Zonen (55, 56, 57) besitzt und jeweils zwei unmittelbar aufeinander folgende Zonen (55, 56, 57) unterschiedliche Magneteigenschaften aufweisen, **gekennzeichnet durch** folgende Verfahrensschritte:
a) Bereitstellen von wenigstens drei flachen metallischen Blechen (60, 61) mit gleicher und konstanter Breite nebeneinander, die jeweils unmittelbar benachbart unterschiedliche Magneteigenschaften aufweisen,
wobei die zwei äußeren Bleche (60) aus einem magnetischen Material und das zwischen diese beiden Bleche (60) eingelegte mittlere Blech (61) aus einem nichtmagnetischen Material bestehen,
b) Fügen der wenigstens drei Bleche (60, 61) an den unmittelbar benachbart liegenden Begrenzungskanten (65) zur Bildung eines Blechabschnitts (62),
c) Verformung des Blechabschnitts (62) in eine Hülsenform,
d) gegenseitige Befestigung der sich nun gegenüberliegenden, in Längsrichtung der Hülse verlaufenden Begrenzungskanten (65') zur Bildung eines Hülsenrohlings (64),
e) Endbearbeitung des Hülsenrohlings (64) bis zum Erreichen einer gewünschten Geometrie des Gehäuses (66).

2. Verfahren nach Anspruch 1, **dadurch gekennzeichnet, dass** die äußeren Bleche (60) ferromagnetisch oder ferritisch und das dazwischen liegende Blech (61) austenitisch sind.

3. Verfahren nach einem der Ansprüche 1 oder 2, **dadurch gekennzeichnet, dass** die Bleche (60, 61) als flach gewalzte, maßgeschneiderte Blechabschnitte bereitgestellt werden.

4. Verfahren nach einem der Ansprüche 1 bis 3, **dadurch gekennzeichnet, dass** das Fügen der Bleche (60, 61) an den unmittelbar benachbart liegenden Begrenzungskanten (65) mittels Laserschweißen erfolgt.

5. Verfahren nach einem der Ansprüche 1 bis 4, **dadurch gekennzeichnet, dass** die Verformung des Blechabschnitts (62) in eine Hülsenform mittels Rollen, Rollieren oder Biegen erfolgt.

6. Verfahren nach einem der Ansprüche 1 bis 5, **dadurch gekennzeichnet, dass** die gegenseitige Befestigung der sich nach der Verformung gegenüberliegenden, in Längsrichtung der Hülse verlaufenden Begrenzungskanten (65') mittels Laserschweißen erfolgt.

7. Verfahren nach einem der Ansprüche 1 bis 6, **dadurch gekennzeichnet, dass** die Endbearbeitung des Hülsenrohlings (64) mittels Abstrecken, Rollieren, Bördeln und/oder Auftulpen erfolgt.

## Claims

1. Method for producing a high-strength valve housing (66) for an electromagnetically actuable valve, the housing (66) possessing at least three zones (55, 56, 57), and in each case two directly successive zones (55, 56, 57) having different magnetic properties, **characterized by** the following method steps:
a) Provision of at least three flat metal sheets (60, 61) of equal and constant width next to one another, which in each case have, directly adjacently, different magnetic properties, the two outer sheets (60) consisting of a magnetic material, and the middle sheet (61) inserted between these two sheets (60) consisting of a non-magnetic material,
b) joining of the at least three sheets (60, 61) at the directly adjacently lying boundary edges (65) so as to form a sheet section (62),
c) deformation of the sheet section (62) into a sleeve shape,
d) mutual fastening of the then opposite boundary edges (65'), running in the longitudinal direction of the sleeve, so as to form a sleeve blank (64),
e) final machining of the sleeve blank (64) until a desired geometry of the housing (66) is reached.

2. Method according to Claim 1, **characterized in that** the outer sheets (60) are ferromagnetic or ferritic and the sheet (61) lying between them is austenitic.

3. Method according to either one of Claims 1 and 2, **characterized in that** the sheets (60, 61) are provided as flat-rolled cut-to-size sheet sections.

4. Method according to one of Claims 1 to 3, **characterized in that** the joining of the sheets (60, 61) at the directly adjacently lying boundary edges (65) takes place by means of laser welding.

5. Method according to one of Claims 1 to 4, **characterized in that** the deformation of the sheet section (62) into a sleeve shape takes place by means of rolling, tumbling or bending.

6. Method according to one of Claims 1 to 5, **characterized in that** the mutual fastening of the boundary edges (65') lying opposite one another after deformation and running in the longitudinal direction of the sleeve takes place by means of laser welding.

7. Method according to one of Claims 1 to 6, **characterized in that** the final machining of the sleeve blank (64) takes place by means of ironing, tumbling, flanging and/or beading.

## Revendications

1. Procédé de fabrication d'un boîtier d'injecteur (66), solide, pour un injecteur à commande électromagnétique selon lequel
le boîtier (66) comporte au moins trois zones (55, 56, 57) et chaque fois deux zones (55, 56, 57) qui se suivent directement ont des propriétés magnétiques différentes,
**caractérisé par** les étapes de procédé suivantes:
a) on fournit au moins trois tôles métalliques plates (60, 61) ayant la même largeur constante en les juxtaposant, ces tôles directement adjacentes ayant des propriétés magnétiques différentes,
les deux tôles extérieures (60) étant en une matière magnétique et la tôle intermédiaire (61) placée entre les deux tôles (60) étant en une matière non magnétique,
b) on assemble au moins trois tôles (60, 61) par les arêtes de limitation (65) directement voisines pour former un segment de tôle (62),
c) on déforme le segment de tôle (62) pour lui donner une forme de manchon,
d) on fixe réciproquement les arêtes de limitation (65') qui se font maintenant face, et sont dirigées dans la direction longitudinale du manchon pour réaliser une ébauche de manchon (64),
e) on effectue l'usinage final de l'ébauche de manchon (64) jusqu'à obtenir la géométrie souhaitée pour le boîtier (66).

2. Procédé selon la revendication 1,
**caractérisé en ce que**
les tôles extérieures (60) sont ferromagnétiques ou ferritiques et la tôle (61) intermédiaire est une tôle austénitique.

3. Procédé selon l'une des revendications 1 ou 2,
**caractérisé en ce que**
les tôles (60, 61) sont des segments de tôle laminés à plat, découpés aux dimensions.

4. Procédé selon l'une des revendications 1 à 3,
**caractérisé en ce que**
l'assemblage des tôles (60, 61) contre les arêtes de limitation (65) directement voisines se fait par soudage par laser.

5. Procédé selon l'une des revendications 1 à 4,
**caractérisé en ce que**
la déformation du segment de tôle (62) pour lui donner une forme de manchon se fait par roulage, laminage ou cintrage.

6. Procédé selon l'une des revendications 1 à 5,
**caractérisé en ce que**
la fixation des arêtes limites (65') qui se font face après la mise en forme et s'étendent dans la direction longitudinale du manchon se fait par soudage par laser.

7. Procédé selon l'une des revendications 1 à 6,
**caractérisé en ce que**
l'usinage final de l'ébauche en forme de manchon (64) se fait par trempe, roulage, sertissage et/ou rabattement.
